# EUROPEAN PATENT APPLICATION

(11) **EP 3 608 843 A1**
(43) Date of publication of application: **12.02.2020**
(21) Application number: 18802913.6
(22) Date of filing: 09.04.2018
(51) Int. Cl.: G06K 19/06

(54) **STRUCTURE THREE-DIMENSIONAL CODE AND ANTI-COUNTERFEITING METHOD**

(30) Priority: 16.05.2017 CN 201710343704
(71) Applicant: Li, Feng, Hainan 570102 (CN)
(72) Inventor: Li, Feng, Hainan 570102 (CN)
(74) Representative: Murgitroyd & Company
(86) International application number: PCT/CN2018/082381
(87) International publication number: WO 2018/210076

(57) **Abstract**

A structural three-dimensional code and an anti-counterfeiting method. The structural three-dimensional code includes an anti-counterfeiting feature layer (11); the anti-counterfeiting feature layer (11) has one or more convex or concave coding patterns (12, 22); and in the anti-counterfeiting feature layer (11), regions with different heights are identified by different colors.

## Description

### Technical Field

The present document relates to, but is not limited to, the field of anti-counterfeiting, in particular to a structural three-dimensional code and an anti-counterfeiting method.

### Background

To prevent commodities from being forged by criminals and facilitate consumers to identify real commodities, an approach commonly adopted at present is to attach an anti-counterfeiting structure to commodities to carry anti-counterfeiting information, which includes: adding a special design (such as a specific groove at a bottom of a bottle) to packaging of a commodity, pasting or printing an anti-counterfeiting label with anti-counterfeiting information on packaging of the commodity, and adopting packaging printed with anti-counterfeiting information (such as plastic packaging outside a cigarette box, a drawstring on the plastic packaging, etc.).

Related technologies have defects that anti-counterfeiting labels are easy to be forged at a low cost and in large quantities, thus reducing reliability of anti-counterfeiting.

### Summary

The following is a summary of subject matter described in detail herein. This summary is not intended to limit the scope of protection of the claims.

The present application provides a structural three-dimensional code and an anti-counterfeiting method, which can improve reliability of anti-counterfeiting through a physical structure.

The present application adopts the following technical solutions.

At least one embodiment of the present application provides a structural three-dimensional code, and the structural three-dimensional code includes an anti-counterfeiting feature layer; the anti-counterfeiting feature layer has one or more convex or concave coding patterns; and in the anti-counterfeiting feature layer, regions with different heights are identified by different colors.

Optionally, the coding pattern includes one or more of the following: a bar code and a two-dimensional code.

Optionally, one or more of the following parameters of the coding pattern are random: a content of the coding pattern; a convex height of the coding pattern; a concave depth of the coding pattern.

Optionally, the regions with the different heights being identified by the different colors, includes one or more of the following situations: the anti-counterfeiting feature layer includes two or more composite layers with different colors; surfaces of the regions with the different heights belong to different composite layers; the anti-counterfeiting feature layer includes a color block layer and a covering layer positioned on the color block layer, and the coding pattern and a remaining region in the anti-counterfeiting feature layer belong to the color block layer and the covering layer respectively; and the regions with the different heights are configured with the different colors.

Optionally, colors of regions with a same height are same or different.

Optionally, heights of various positions of the coding pattern are same or different.

At least one embodiment of the present application provides an anti-counterfeiting method based on a structural three-dimensional code. The method includes: collecting an anti-counterfeiting feature for the above structural three-dimensional code; wherein the anti-counterfeiting feature includes information of the coding pattern and a height of the coding pattern; and after receiving anti-counterfeiting inquiry information containing anti-counterfeiting information, comparing the anti-counterfeiting information with the collected anti-counterfeiting feature of the corresponding structural three-dimensional code to obtain an anti-counterfeiting inquiry result.

Optionally, collecting the anti-counterfeiting feature includes: collecting an image of the anti-counterfeiting feature layer; wherein, the image at least includes an image of the coding pattern; and the information of the coding pattern includes the image of the coding pattern.

Optionally, collecting the anti-counterfeiting feature includes: collecting a color image or a gray image of the anti-counterfeiting feature layer; wherein the height of the coding pattern is identified by a color or a gray scale of a corresponding region in the image.

Optionally, comparing the anti-counterfeiting information with the collected anti-counterfeiting feature of the corresponding structural three-dimensional code includes: comparing the anti-counterfeiting information with the information of the coding pattern and the height of the coding pattern in the corresponding structural three-dimensional code.

At least one embodiment of the present application provides a storage medium; wherein the storage medium is configured to store program codes for executing the following acts: collecting an anti-counterfeiting feature for the above structural three-dimensional code; wherein the anti-counterfeiting feature includes information of the coding pattern and a height of the coding pattern; after receiving anti-counterfeiting inquiry information containing anti-counterfeiting information, comparing the anti-counterfeiting information with the collected anti-counterfeiting feature of the corresponding structural three-dimensional code to obtain an anti-counterfeiting inquiry result.

At least one embodiment of the present application provides a structural three-dimensional code. In the structural three-dimensional code not only a coding pattern formed on a two-dimensional plane by a convex or concave region can be used as an anti-counterfeiting feature, but also a height of the coding pattern can be used as an anti-counterfeiting feature, which is equivalent to adding a feature of one dimension on the basis of two-dimension to form a stereoscopic three-dimensional structure. Therefore, aesthetic feeling and identification are improved, and furthermore, the added dimension can be conveniently collected and compared while reliability of anti-counterfeiting is improved.

At least one embodiment of the present application provides an anti-counterfeiting method based on a structural three-dimensional code, which can add an anti-counterfeiting feature in a height direction during anti-counterfeiting inquiry; and in an optional implementation, the anti-counterfeiting feature in the height direction is identified by colors, which greatly increases difficulty of counterfeiting and is convenient for identification and collection.

Other aspects will become apparent upon reading and understanding the drawings and detailed description.

### Brief Description of Drawings

FIG. 1 is a first schematic diagram of a structural three-dimensional code according to Embodiment one.
FIG. 2 is a second schematic diagram of a structural three-dimensional code according to Embodiment one.
FIG. 3a is a front view of a partial region of the structure three-dimensional code shown in FIG. 2 when a coding pattern is convex.
FIG. 3b is a stereoscopic view of the region shown in FIG. 3a.
FIG. 4 is a stereoscopic view of one positioning identification when a coding pattern is a two-dimensional code and convex.
FIG. 5a is a front view of a partial region of the structure three-dimensional code shown in FIG. 2 when a coding pattern is concave.
FIG. 5b is a stereoscopic view of the region shown in FIG. 5a.
FIG. 6 is a stereoscopic view of a positioning identification when a coding pattern is a two-dimensional code and is concave.
FIG. 7 is a schematic diagram of an anti-counterfeiting feature layer including multiple composite layers.
FIG. 8 is a flow chart of an anti-counterfeiting method based on a structural three-dimensional code according to Embodiment two.

### Detailed Description

It should be noted that if there is no conflict, embodiments of the present invention and different features in the embodiments can be combined with each other, and are all within the scope of protection of the present document.

### Embodiment one

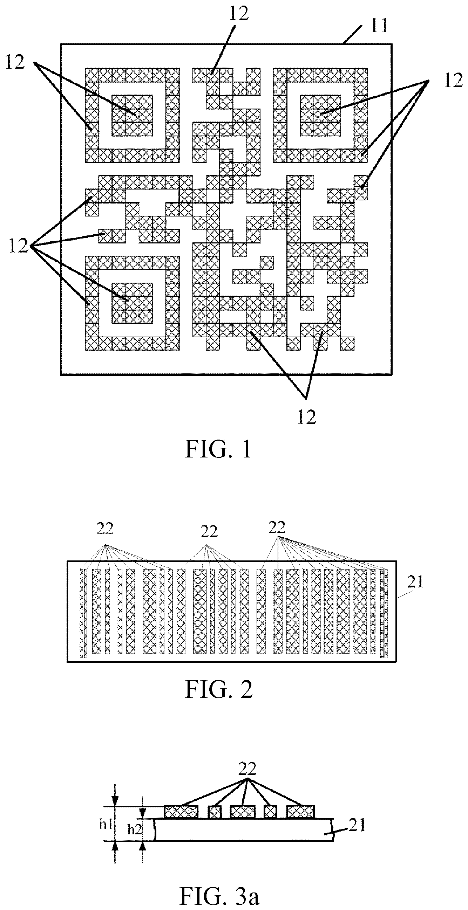

A structural three-dimensional code, as shown in FIG. 1, includes an anti-counterfeiting feature layer 11. The anti-counterfeiting feature layer 11 has one or more convex or concave coding patterns 12; and in the anti-counterfeiting feature layer 11, regions with different heights are identified by different colors.

In the embodiment, a dimension in a height direction is added by making a coding pattern which originally has only two dimensions (length and width) convex or concave, to form a stereoscopic coding pattern and obtain a structural three-dimensional code. The structural three-dimensional code may be regarded as an anti-counterfeiting structure, and anti-counterfeiting is performed based on the three-dimensional code of a stereoscopic structure for the structural three-dimensional code.

In the embodiment, to facilitate a user to identify height information from a two-dimensional plane, different heights are identified with different colors, so that a height may be identified by identifying a color; and not only is reliability of anti-counterfeiting improved, but also the added dimension can be conveniently collected and compared.

In the embodiment, a color may further improve aesthetic feeling and identification, and may be used as a color feature. For example, warm colors are used for a certain height, and cold colors are used for another height, therefore not only the height can be identified, but also an additional color feature can be added.

In the embodiment, a difference between colors of regions with different heights may be configured to be sufficient for identifying the coding pattern. Considering that both different illuminations and different angles will lead to changings of a color, a color of the convex or concave region (i.e. the region of the coding pattern) and a color of a remaining region may have a larger color difference or gray scale difference. For example, one is a color of light colors, and the other is a color of dark colors; and for another example, one is a color of cold colors, and the other is a color of warm colors; or the like. The larger color difference or gray scale difference mentioned in the present document refers to a color difference or gray scale difference greater than or equal to a lower limit value of identification; and the lower limit value refers to a minimum color difference or gray difference between the coding pattern and a background when the coding pattern can be identified.

In this embodiment, the convex or concave coding pattern refers to that the coding pattern and the remaining region in the anti-counterfeiting feature layer have a height difference, wherein the coding pattern is higher or lower than the remaining region. From an angle perpendicular to a surface of the anti-counterfeiting feature layer, a two-dimensional coding pattern may be seen; and after a sight direction is slightly tilted, it may be seen that the coding pattern on the anti-counterfeiting feature layer is convex or concave.

Optionally, a pattern formed by the coding pattern may include, but is not limited to, one or more of the following: a bar code and a two-dimensional code.

Herein, a type of the bar code includes but is not limited to any one or more of the following: a Code39 code (standard 39 code), Codabar code, Code25 code (standard 25 code), ITF25 code (interleaved 25 code), Matrix25 code, UPC-A code, UPC-E code, EAN-13 code (EAN-13 International Commodity Barcode), EAN-8 code (EAN-8 International Commodity Barcode), China Postal Code (a variant of the matrix 25 code), Code-B code, MSI code, Code11 code, Code93 code, ISBN code, ISSN code, Code128 code (including EAN 128 code), Code39EMS (EMS-specific 39 code), etc.

Herein, the type of the two-dimensional code includes but is not limited to any one or more of the following: a PDF417 code (mainly used for transportation), QR code (mainly used for commercial purposes), Chinese-sensible code, stacked two-dimensional code, matrix two-dimensional code, row two-dimensional code, etc.

In the embodiment, the coding pattern is not limited to the above examples, and any graph which is formed on a two-dimensional plane and carries certain data or information may be contained therein.

Herein, for example, when the coding pattern is a bar code, straight lines with different thicknesses may be regarded as the coding pattern and the remaining may be regarded as a background region; and for another example, when the coding pattern is a two-dimensional code, a black color (dark color) or a white color (light color) in the two-dimensional code may be regarded as the coding pattern, and the remaining may be regarded as the background region.

In FIG. 1, a region filled with grid lines is a coding pattern 12, and the remaining in an anti-counterfeiting feature layer 11 except the coding pattern 12 may be regarded as a background region; and the coding pattern 12 and the background region are interlaced with each other. Herein, the coding pattern 12 forms a pattern of the two-dimensional code.

In FIG. 2, a region filled with grid lines is a coding pattern 22; the remaining in an anti-counterfeiting feature layer 21 is a background region; and the coding pattern 22 and the background region are interlaced with each other. Herein, the coding pattern 22 forms a pattern of the bar code.

In FIGs. 1 and 2, the coding patterns are enlarged for clarity. A size of the coding pattern in a practical application is not limited by the above figures.

In the embodiment, a height may also be understood as a depth. For example, for the structural three-dimensional codes shown in FIGs. 1 and 2, the depth and the height both refer to a length in a direction perpendicular to a paper surface.

In the embodiment, convex or concave is a relative concept. For example, when the coding pattern is concave, the background region may be regarded to be convex; and when the coding pattern is convex, the background region may be regarded to be concave. That is, the coding pattern and the background region are not in the same horizontal plane.

In the embodiment, the coding pattern is a graph distributed according to a certain coding rule and used for expressing data or information. For example, the two-dimensional code is a black-and-white (or light-and-dark) graph distributed on a two-dimensional plane according to a certain rule and used for recording data or information, wherein the dark/black part is an information layer and the light/white part is a background layer. For another example, the bar code is multiple black bars (or dark bars) and blanks with different widths arranged according to a certain coding rule and used for expressing data or information, wherein the black bars (or dark bars) are an information layer and the blanks are a background layer.

In the embodiment, since there is a height difference between the coding pattern and the background region, the coding pattern is a graph with a concave-convex texture, which not only may carry data or information like a two-dimensional coding pattern such as a common two-dimensional code, or bar code, or the like, but also may take the height as a third-dimensional anti-counterfeiting feature, thus forming a three-dimensional code with a stereoscopic structure and improving reliability of anti-counterfeiting.

In the embodiment, the anti-counterfeiting feature layer may be a material with a certain thickness, and the convex or concave coding pattern may be formed on the anti-counterfeiting feature layer through a process such as laser engraving, enchasing, or the like. For example, a region at which the coding pattern is located is carved out (i.e. an implementation in which the coding pattern is concave), and in this case a region not carved is the background region. For another example, a region other than the coding pattern is carved out (i.e. an implementation in which the coding pattern is convex), and in this case the region carved out is the background region. Of course, in a practical application, it is not necessarily that an entire region of the background region has the same height; similarly, it is not necessarily that an entire region of the coding pattern has the same height.

In the embodiment, heights of the same coding pattern in the anti-counterfeiting feature layer may be the same or different. For example, for different regions in an encoding pattern, a part of regions may be higher or lower than other regions. For any example, if there are multiple coding patterns in the anti-counterfeiting feature layer, the heights of any two coding patterns in the multiple coding patterns may be the same or different.

In the embodiment, the height of the coding pattern may be customized. For example, when the height may be configured as 0, the depth of the coding pattern is equivalent to be equal to a thickness of the anti-counterfeiting feature layer, that is, the coding pattern penetrates the anti-counterfeiting feature layer.

Regarding FIG. 2 as a top view, in an implementation in which the coding pattern is convex, a front view of a partial region is as shown in FIG. 3a, the coding pattern 22 (a part filled with grid lines in FIG. 3a) is convex in the anti-counterfeiting feature layer 21, and relatively, a background region is concave in the anti-counterfeiting feature layer 21. Herein a height h1 of the coding pattern 22 is greater than a height h2 of the background region. If a depth of the coding pattern 22 is regarded as 0, then a depth of the background region is (h1-h2).

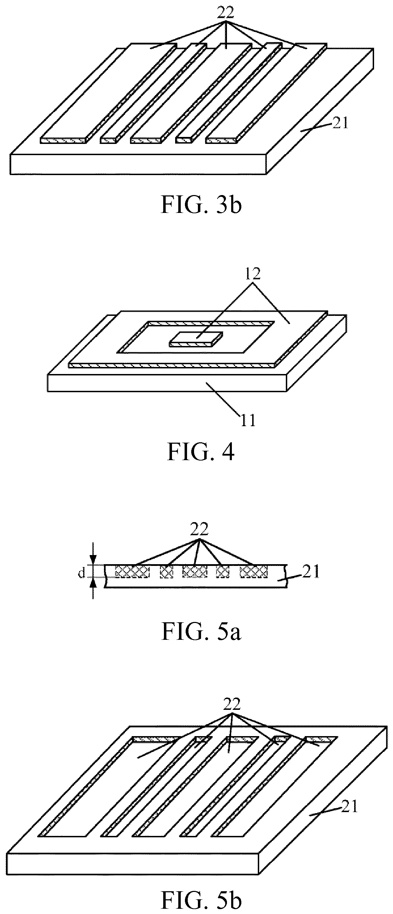

FIG. 3b shows a stereoscopic view corresponding to the partial region shown in FIG. 3a. From FIG. 3b, it may be seen that a bar code pattern formed by the coding pattern 22 on the anti-counterfeiting feature layer 21 is convex.

When the coding pattern is the two-dimensional code, in an implementation in which the coding pattern is convex, a stereoscopic view of a positioning identification is shown in FIG. 4, and the remaining of the two-dimensional code may be analogized similarly. It may be seen that the coding pattern 12 on the anti-counterfeiting feature layer 11 is convex.

Regarding FIG. 2 as a top view, in an implementation in which the coding pattern is concave, a front view is as shown in FIG. 5a, and the coding pattern 22 (a part filled with grid lines in FIG. 5a, the concave region is not visible from the front view, so the outline is indicated by dashed lines) is concave in the anti-counterfeiting feature layer 21; and relatively, the background region is convex. Herein a height of the coding pattern 22 is smaller than a height of the background region. If a depth of the background region is regarded as 0, then a depth d of the coding pattern 22 is greater than the depth of the background region.

FIG. 5b shows a stereoscopic view corresponding to the partial region shown in FIG. 5a. From FIG. 5b, it may be seen that a bar code pattern formed by the coding pattern 22 on the anti-counterfeiting feature layer 21 is concave.

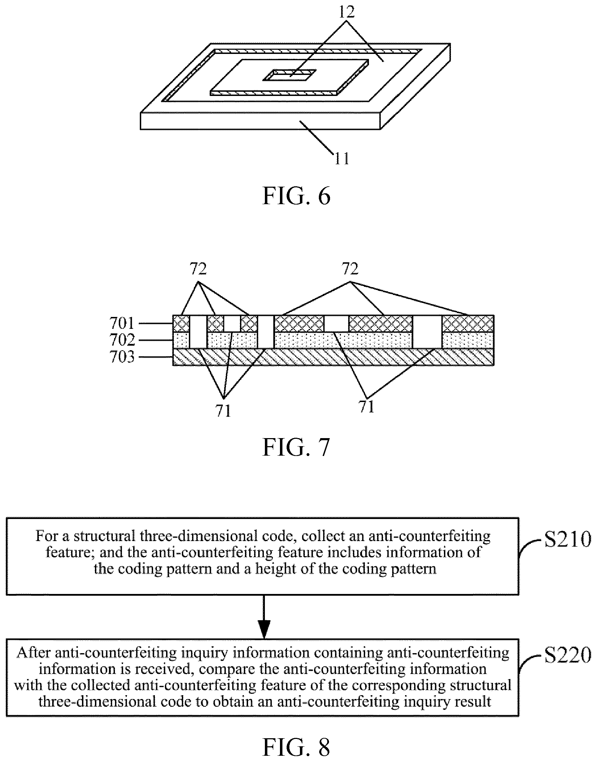

When the coding pattern is the two-dimensional code, in an implementation in which the coding pattern is concave, a stereoscopic 1 view of a positioning identification is shown in FIG. 6, and the remaining of the two-dimensional code may be analogized similarly. It may be seen that the coding pattern 12 on the anti-counterfeiting feature layer 11 is convex.

In the embodiment, the convex or concave coding pattern may be a common bar code, or two-dimensional code, etc., or a modified bar code, a modified two-dimensional code, etc., for example, right angles of a two-dimensional code are all modified into rounded corners, and for another example, each point in a two-dimensional code is changed from a square to a circular, etc., and for yet another example, an outline of a two-dimensional code is a pattern such as a car and a flower, etc. In addition, LOGO or another graphic, character, etc. may be configured in the coding pattern by printing, pasting, etc.

In the embodiment, in addition to the convex or concave coding pattern, the structural three-dimensional code may also include other information, such as anti-counterfeiting information, commodity information, an anti-counterfeiting inquiry mode (such as, by website, telephone, WeChat, or QQ number) and an operation act, or the like, formed by a process such as printing or engraving, etc.

In an optional implementation, one or more of the following parameters of the coding pattern are random: a content of the coding pattern; a convex height of the coding pattern; a concave depth of the coding pattern.

In the optional implementation, if the content of the coding pattern and the convex or concave height of the coding pattern are random, then randomness and individuation of the structural three-dimensional code can be greatly enhanced, counterfeiting difficulty can be increased, and thus reliability of anti-counterfeiting can be improved.

In the optional implementation, if the coding pattern is generated on the anti-counterfeiting feature layer by means of engraving, enchasing or the like, then the height of the coding pattern may be random by means of randomness of the depth during engraving/enchasing.

In the optional implementation, randomness of the content of the coding pattern may refer to that data or information, identified by code scanning software, of coding patterns in different structural three-dimensional codes is random. For example, the coding pattern in each structural three-dimensional code is generated with a random serial number corresponding to the each structural three-dimensional code one by one, so the coding pattern itself in the each structural three-dimensional code is different.

In the optional implementation, randomness of the convex or concave height may contain any one or several of the following three meanings.

A first meaning is that heights of different coding patterns in one structural three-dimensional code may be random respectively. For example, in one structural three-dimensional code, one coding pattern is engraved according to a depth d1, and another coding pattern is engraved according to a depth d2.

A second meaning is that in the same coding pattern of one structural three-dimensional code heights of different regions may be random respectively. For example, in one two-dimensional code pattern, a left half of the two-dimensional code is engraved according to a depth d3, and a right half of the two-dimensional code is engraved according to a depth d4.

The third meaning is that heights of coding patterns in different structural three-dimensional codes are random respectively. For example, a coding pattern in one structural three-dimensional code is engraved according to a depth d5, and a coding pattern in another structural three-dimensional code is engraved according to a depth d6.

In a practical application, any one or more of the above three meanings may be selected.

In an optional implementation, the regions with the different heights being identified by the different colors may include one or more of the following situations: the anti-counterfeiting feature layer includes two or more composite layers with different colors; surfaces of the regions with the different heights belong to different composite layers; the anti-counterfeiting feature layer includes a color block layer and a covering layer positioned on the color block layer, and the coding pattern and a remaining region in the anti-counterfeiting feature layer belong to the color block layer and the covering layer respectively; the regions with the different heights are configured with the different colors.

In the optional implementation, the composite layers may be composited together by pasting, coating, extrusion, etc.

In the optional implementation, the composite layers may be regarded as division of the anti-counterfeiting feature layer longitudinally, and a sum of thicknesses of the composite layers is equal to a thickness of the anti-counterfeiting feature layer. While division between the coding pattern and the background region may be regarded as division of the surface of the anti-counterfeiting feature layer, for example, from the surfaces shown in FIGs. 1 and 2, a region outside the region at which the coding pattern is located is the background region.

In the optional implementation, the composite layers may be ink layers, films, paper, or the like.

For example, multiple layers of ink which are sequentially superposed may be used as the anti-counterfeiting feature layer. For another example, multiple layers of films or paper which are sequentially composited and colored may be used as the anti-counterfeiting feature layer. The above are just examples. In a practical application, the composite layers may be made of any material and the colors on the composite layers may be configured in any way.

In the optional implementation, regions with different heights in the anti-counterfeiting feature layer may be identified by coloring or a physical structure.

In a case of identifying through the composite layers, it is assumed that the anti-counterfeiting feature layer includes three composite layers, as shown in FIG. 7 which may be regarded as a sectional view; the anti-counterfeiting feature layer is sequentially a first composite layer 701, a second composite layer 702 and a third composite layer 703 from top to bottom. It is assumed that surfaces of some parts of the coding pattern 71 belong to an upper surface of the second composite layer 702 (e.g., a depth of these parts is equal to a thickness of the first composite layer 701), and surfaces of other parts belong to an upper surface of the third composite layer 703 (i.e., a depth of these parts is equal to the thickness of the first composite layer 701 plus a thickness of the second composite layer 702); then a background region 72 presents a color of an upper surface of the first composite layer 701.

In a practical application, the surface of the coding pattern may not be limited to, belonging to an upper surface of a certain composite layer. If the whole composite layers have colors, the surface of the coding pattern presents a color of one composite layer as long as the surface of the coding pattern belongs to the composite layer. For example, in FIG. 7, if the depth at which the coding pattern is concave is greater than the thickness of the first composite layer 701 and less than a depth equal to the thickness of the first composite layer 701, then the surface of the coding pattern presents a color inside the second composite layer 702.

In a case of identifying through a color block layer and a covering layer, the color block layer has one or more tiled color blocks. If the coding pattern is convex, then the coding pattern belongs to the covering layer and the background region belongs to the color block layer. If the coding pattern is concave, the coding pattern belongs to the color block layer and the background region belongs to the covering layer. Colors of the covering layer and the color block need to have a larger color difference or gray scale difference.

In the optional implementation, the colors, the color blocks, or configured colors on the composite layers may be formed by means of printing, coating paint (such as but are not limited to oil color, ink, paint, pigment, dye, etc.), or the like. The composite layers may have colors only on upper surfaces, or may have colors in the whole.

In the optional implementation, if the colors/configured colors of the composite layers are random and an arrangement mode thereof is random, then randomness of the structural three-dimensional code can be greatly enhanced, and thus reliability of anti-counterfeiting can be improved.

In other optional implementations, the anti-counterfeiting feature layer may further be a whole, but a color of a surface and an internal color are different, so the colors of the coding pattern and the remaining region are also different.

In an optional implementation, the colors of the regions with the same height may be the same or different.

For example, colors of the coding pattern belong to warm colors and colors of the background region belong to cold colors, then even if the whole coding pattern is of the same height, some parts may be red and some parts may be orange; in this way not only different heights may be identified by cold and warm colors, but also an additional color feature may be used as an additional anti-counterfeiting feature. For example, the color block layer includes two color blocks, i.e., a red color block and an orange color block, in an implementation in which the coding pattern is concave, in the coding pattern, a concave region formed by engraving out a covering layer above the red block represents red, and a concave region formed by engraving out a covering layer above the orange block represents orange.

In an optional implementation, a region forming the coding pattern may be partially convex and partially concave.

In an optional implementation, heights of various positions of the coding pattern may be the same or different.

In the optional implementation, the region at which the coding pattern is located may have one or more heights, and if there are two or more heights, the coding pattern itself may further be uneven. If the anti-counterfeiting feature layer includes multiple composite layers with different colors, then in the implementation in which the coding pattern is concave the coding pattern may present more than one color. For example, a color of an uppermost composite layer may be configured as a light color such as white, while the other composite layers below may be configured as dark colors such as red, blue, black, etc., i.e., the background layer is white or light, while different positions of the coding pattern may present different colors according to different heights. Although the coding pattern is colored, if there are larger color differences or gray differences between these colors of the coding pattern and the color of the background region, the coding pattern is still easy to be identified by code scanning software.

In an example of the optional implementation, the coding pattern itself is concave and convex, but any part is still convex or concave with respect to the background region; and since the coding pattern formed on the two-dimensional plane is two-dimensional and has nothing to do with the height, so it is not affected by concavity or convexity. In another example, some of the coding pattern may be higher than the background region, and some of the coding pattern may be lower than the background region.

In another optional implementation, the background region may also have one or more heights; i.e., the background region may also be uneven. Even if the background region is concave and convex, a color of any part of the background region and the color of the coding pattern have a larger color difference or gray scale difference, so that the coding pattern can be identified.

In the embodiment, in addition to the anti-counterfeiting feature layer, the structural three-dimensional code may further include another material attached to the anti-counterfeiting feature layer by the means of compositing, pasting, etc.

In the embodiment, a back surface of the anti-counterfeiting feature layer (i.e., a back surface of the surface shown in FIG. 1 or FIG. 2) may also be coated with an adhesive layer, so that the structural three-dimensional code may be pasted on a commodity or a package of the commodity, and the pasted code pattern should be in a position that may be observed by the consumer directly or after the package of the commodity is unpacked. After the anti-counterfeiting feature layer is coated with the adhesive layer, and before pasted on the commodity or the package of the commodity, the anti-counterfeiting feature layer may be pasted on a piece of release paper firstly, and may be uncovered from the piece of release paper when pasting is needed.

In the embodiment, a front surface of the anti-counterfeiting feature layer (i.e., the surface shown in FIG. 1 or FIG. 2) may also have another printed or engraved pattern and/or character. The pattern may include, but is not limited to, a graph or a drawing. The graph includes a regular graph such as a rectangle, a triangle, a circle, an oval, or the like, or may include an irregular graph. The character may include a Chinese character, a foreign character, a letter, a figure, a symbol, etc. The data or information carried in the coding pattern formed by an information layer may be generated according to the character, or may have nothing to do with the character.

### Embodiment two

An anti-counterfeiting method based on a structural three-dimensional code, as shown in FIG. 8, includes S210 and S220.

In S210, for the structural three-dimensional code described in Embodiment one or any optional implementation of Embodiment one, an anti-counterfeiting feature is collected; and the anti-counterfeiting feature includes information of the coding pattern and a height of the coding pattern.

In S220, after anti-counterfeiting inquiry information containing anti-counterfeiting information is received, the anti-counterfeiting information is compared with the collected anti-counterfeiting feature of the corresponding structural three-dimensional code to obtain an anti-counterfeiting inquiry result.

In the embodiment, the collected anti-counterfeiting feature may be stored in an anti-counterfeiting inquiry server; and the S220 may be performed by the anti-counterfeiting inquiry server.

In the embodiment, a user may transmit the anti-counterfeiting inquiry information to the anti-counterfeiting inquiry server by means of photographing, scanning, manual/voice inputting, or the like through any one of ways such as a short message, a telephone call, WeChat, inputting into a webpage, etc., and the anti-counterfeiting inquiry server may feedback the anti-counterfeiting inquiry result by any one of the above multiple ways.

In the embodiment, the anti-counterfeiting inquiry result may be whether it is determined to be genuine, or processing such as increasing points for the user who sent the anti-counterfeiting inquiry information.

In the embodiment, if the anti-counterfeiting feature of the structural three-dimensional code and data such as supply information of a commodity corresponding to the anti-counterfeiting feature are stored correspondingly, then the anti-counterfeiting inquiry result may also include data such as the supply information of the commodity, which can play a role in anti-channel conflict.

In an optional implementation, collecting the anti-counterfeiting feature may include: an image of the anti-counterfeiting feature layer is collected; wherein the image at least includes an image of the coding pattern; and the information of the coding pattern includes the image of the coding pattern.

For example, the collected information of the coding pattern is an image of a two-dimensional code or a bar code itself.

In another optional implementation, the information of the coding pattern may also include data or information obtained by identifying the coding pattern; the anti-counterfeiting feature may be collected through code scanning software, for example, the collected information of the coding patterns is information represented by a two-dimensional code or a bar code.

In an optional implementation, collecting anti-counterfeiting feature may include: a color image or a gray image of the anti-counterfeiting feature layer is collected; and the height of the coding pattern is identified by a color or a gray scale of a corresponding region in the image.

In another optional implementation, the height of the coding pattern may be obtained by data when the structural three-dimensional code is produced. For example, it is known during production that the height of the anti-counterfeiting feature layer is x, the depth of engraving is y, and the engraved region forms the coding pattern, then the height of the encoding pattern is x-y. In this case, the colors corresponding to the different heights may be saved, and the colors corresponding to the different heights may be obtained through the data when the structural three-dimensional code is produced.

In the above two optional implementations, the image may be collected by means of photographing or taking a video.

In an optional implementation, comparing the anti-counterfeiting information with the collected anti-counterfeiting feature of the corresponding structural three-dimensional code may include: the anti-counterfeiting information is compared with the information of the coding pattern and the height of the coding pattern in the corresponding structural three-dimensional code.

In the optional implementation, the user may scan the coding pattern through the code scanning software, send identified information (such as information represented by the two-dimensional code or the bar code) as anti-counterfeiting information, and input the color of each part also as the anti-counterfeiting information which may identify the height of the coding pattern to send. Or, the user may obtain the image of the coding pattern (such as the two-dimensional code or the bar code) through photographing or shooting a film, and send the image as anti-counterfeiting information. Or, the user may adopt a mode of combination, such as both photographing and scanning with the code scanning software.

In the optional implementation, if the user sends an image and the user collects an image, then the image sent by the user and the image collected by the user may be compared (including comparison of patterns and/or colors) directly. If the user sends a result identified by the code scanning software and colors and the user collects a result identified by the code scanning software and colors, then the identification result sent by the user may be compared with the collected identification result, and the colors sent by the user may be compared with the collected colors.

If the user sends an image and the user collects a result identified by the code scanning software and heights (or colors), then information may be identified from the image sent by the user through the code scanning software and compared with the collected identification result. If the user collects colors, then the colors may be directly compared with colors in the image sent by the user. If the user collects heights, then a height of each region in the image sent by the user may be determined according to a color of the each region, and compared with the collected heights.

If the user sends a result identified by the code scanning software and colors and the user collects an image and heights (or colors), then information may be identified by using the code scanning software for the collected image and compared with the identification result which the user sends. If the user collects colors, then the colors may be directly compared with the colors sent by the user. If the user collects heights, then a height of each region in the image sent by the user may be determined through a color of the each region, and compared with the collected heights.

Generally speaking, for convenience, the user is not required to measure the heights of various regions, but if the user has a capability to measure, a mode in which the user takes the measured heights as anti-counterfeiting information to send is not excluded. When the user sends heights, the heights may be directly compared with the collected heights during comparison, or may be converted into colors corresponding to the heights, and then the colors are compared with the collected colors.

### Embodiment three

A storage medium is configured to store program codes for executing the following acts: collecting an anti-counterfeiting feature for the structural three-dimensional code described in Embodiment one or any optional implementation of Embodiment one; wherein the anti-counterfeiting feature includes information of the coding pattern and a height of the coding pattern; after anti-counterfeiting inquiry information containing anti-counterfeiting information is received, comparing the anti-counterfeiting information with the collected anti-counterfeiting feature of the corresponding structural three-dimensional code to obtain an anti-counterfeiting inquiry result.

For other implementation details, please refer to Embodiment two.

### Industrial practicability

At least one embodiment of the present application provides a structural three-dimensional code. In the structural three-dimensional code not only a coding pattern formed on a two-dimensional plane by a convex or concave region can be used as an anti-counterfeiting feature, but also a height of the coding pattern can be used as an anti-counterfeiting feature, which is equivalent to adding a feature of one dimension on the basis of two-dimension to form a stereoscopic three-dimensional structure. Therefore aesthetic feeling and identification are improved, and furthermore, the added dimension can be conveniently collected and compared while reliability of anti-counterfeiting is improved. Another embodiment of the present application provides an anti-counterfeiting method based on a structural three-dimensional code, which can add an anti-counterfeiting feature in a height direction during anti-counterfeiting inquiry; and in an optional implementation, the anti-counterfeiting feature in the height direction is identified by colors, which greatly increases difficulty of counterfeiting and is convenient for identification and collection.

## Claims

1. A structural three-dimensional code, comprising: an anti-counterfeiting feature layer;
the anti-counterfeiting feature layer having one or more convex or concave coding patterns; and
in the anti-counterfeiting feature layer, regions with different heights being identified by different colors.

2. The structural three-dimensional code of claim 1, wherein:
the coding pattern comprises one or more of the following: a bar code and a two-dimensional code.

3. The structural three-dimensional code of claim 1, wherein one or more of the following parameters of the coding pattern are random:
a content of the coding pattern;
a convex height of the coding pattern;
a concave depth of the coding pattern.

4. The structural three-dimensional code of claim 1, wherein the regions with the different heights being identified by the different colors comprises one or more of the following situations:
the anti-counterfeiting feature layer comprising two or more composite layers with different colors; surfaces of the regions with the different heights belonging to different composite layers;
the anti-counterfeiting feature layer comprising a color block layer and a covering layer positioned on the color block layer, and the coding pattern and a remaining region in the anti-counterfeiting feature layer belonging to the color block layer and the covering layer respectively;
the regions with the different heights being configured with the different colors.

5. The structural three-dimensional code of claim 1, wherein:
colors of regions with a same height are same or different.

6. The structural three-dimensional code of claim 1, wherein:
heights of various positions of the coding pattern are same or different.

7. An anti-counterfeiting method based on a structural three-dimensional code, comprising:
collecting an anti-counterfeiting feature for the structural three-dimensional code according to any one of claims 1 to 6; wherein the anti-counterfeiting feature comprises information of the coding pattern and a height of the coding pattern; and
after receiving anti-counterfeiting inquiry information containing anti-counterfeiting information, comparing the anti-counterfeiting information with the collected anti-counterfeiting feature of the corresponding structural three-dimensional code to obtain an anti-counterfeiting inquiry result.

8. The anti-counterfeiting method of claim 7, wherein collecting the anti-counterfeiting feature comprises: collecting an image of the anti-counterfeiting feature layer; wherein, the image at least comprises an image of the coding pattern; and the information of the coding pattern comprises the image of the coding pattern.

9. The anti-counterfeiting method of claim 7, wherein collecting the anti-counterfeiting feature comprises: collecting a color image or a gray image of the anti-counterfeiting feature layer;
wherein the height of the coding pattern is identified by a color or a gray scale of a corresponding region in the image.

10. The anti-counterfeiting method of claim 7, wherein comparing the anti-counterfeiting information with the collected anti-counterfeiting feature of the corresponding structural three-dimensional code comprises:
comparing the anti-counterfeiting information with the information of the coding pattern and the height of the coding pattern in the corresponding structural three-dimensional code.
